# EUROPEAN PATENT APPLICATION

(11) **EP 1 083 192 A1**
(43) Date of publication of application: **14.03.2001**
(21) Application number: 00307466.3
(22) Date of filing: 30.08.2000
(51) Int. Cl.: C08F 210/18, C08F 2/34

(54) **Process for feeding liquid comonomer to a polymerization conducted in a fluidized bed reactor**

(30) Priority: 10.09.1999 US 394016
(71) Applicant: UNION CARBIDE CHEMICALS & PLASTICS TECHNOLOGY CORPORATION, Danbury, Connecticut 06817-0001 (US)
(72) Inventor: Eisinger, Ronald Steven, Charleston, West Virgina 25314 (US); Hussein, Fathi David, Cross Lanes, West Virginia 25313 (US); Lee, Kiu Hee, South Charleston, West Virginia 25303 (US)
(74) Representative: Hayes, Adrian Chetwynd

(57) **Abstract**

There is provided a process for a gas phase polymerization of a polymer using at least one liquid olefinic monomer in the presence of a catalyst, under polymerization conditions, and, optionally, in the presence of an inert particulate material, the improvement which comprises adding one or more liquid olefinic monomers directly to a fluidized reactor at one or more points located between 5% and 90% of the fluidized bed height above a distributor plate positioned at or near the bottom of the reactor by means of at least one nozzle or tube positioned to protrude into the fluidized bed at least 2 inches and at least 20% of the radius of the reactor.

## Description

### Field of the Invention

The present invention relates to the production of a polymer in a gas phase fluidized bed polymerization. More particularly, the invention relates to the introduction of one or more monomers in the form of liquids in the polymerization of a polymer such as sticky polymers such as an EPDM.

### Background of the Invention

Gas phase processes and apparatus for the polymerization of at least one alpha olefin are well known in the art. In the production of polyolefins in gas phase processes using alpha olefin monomers, it is customary to feed a comonomer, when present, to the cycle piping. Preferably, the comonomer enters the cycle piping before a heat exchanger, and flows from there into the reactor.

More recently, it has been shown that sticky polymers, including, but not limited to, ethylene-propylene rubbers, ethylene-propylene-diene rubbers, and polybutadiene can be produced in gas phase processes. See, for example, U.S. Patent Nos. 4,994,534; 5,304,588 for conventional and/or condensed mode polymerizations. And, most recently, it has been disclosed that polymers can be produced in liquid mode or liquid monomer polymerization mode as described, for example, in U.S. Patent No. 5,453,471; WO 96/04322 (PCT/US95/09826); and WO 96/04323 (PCT/US95/09827).

However, when a sticky polymer is produced, particularly at a temperature at or above its softening or sticking temperature and/or below its dew point temperature, a chunk of polymer can form at the point at which the liquid comonomer enters the cycle piping. When the chunk grows large enough, it blocks the flow of cycle gas through the piping. Thus, operating time is limited to no more than several days of continuous operation. This problem was recognized for polymerization of EPDM in the gas phase in U.S. Patent No. 5,106,927, and injection of a liquid diene directly into the bed was suggested. Means and location of injecting a diene were not specified.

Accordingly, there is a need to prevent the formation of this chunking phenomenon and to operate the polymerization in a continuous manner over longer periods of time.

### Summary of the Invention

Surprisingly, there is provided in a process for a gas phase polymerization of a polymer using at least one liquid olefinic monomer in the presence of a catalyst, under polymerization conditions, and, optionally, in the presence of an inert particulate material, the improvement which comprises adding one or more liquid olefinic monomers directly to a fluidized reactor at one or more points located between 5% and 90% of the fluidized bed height above a distributor plate positioned at or near the bottom of the reactor by means of at least one nozzle or tube positioned to protrude into the fluidized bed at least 2 inches and at least 20% of the radius of the reactor.

In a preferred embodiment, the present invention provides a process for producing a sticky polymer in a gas phase polymerization in the presence of a catalyst, and, optionally in the presence of an inert particulate material, which process comprises adding one or more liquid monomers directly to a fluidized reactor at one or more points located between 5% and 90% of the fluidized bed height above a distributor plate positioned at or near the bottom of the reactor by means of a nozzle or tube positioned to protrude into the fluidized bed of the reactor at least 2 inches and at least 20% of the radius of the reactor.

### Detailed Description of the Invention

Process Equipment and Conditions. The invention is applicable to gas-phase fluidized-bed reactors including those reactors which are gas fluidized and assisted by mechanical stirring means. With the exception of the feeding of the comonomer(s), suitable polymerization equipment and conditions are described for example in U.S. Patent Nos. 4,994,534 and 5,453,471.

Typically, such reactors are vertical in design having a height to diameter ratio of the reaction zone in the range of about 2.7:1 to about 4.6:1. The range of course can vary to larger or smaller ratios and depends upon the desired production capacity. The cross-sectional area of the velocity reduction zone is typically within the range of about 2.6 to about 2.8 multiplied by the cross-sectional area of the reaction zone.

The fluidized reaction zone includes a bed of growing polymer particles, formed polymer particles and a minor amount of catalyst all fluidized by the continuous flow of polymerizable and modifying gaseous components in the form of make up feed and recycle fluid through the reaction zone. On start-up, the reactor is charged with a base of particulate polymer particles. Such particles can be the same as the polymer being formed or different. When different, they are withdrawn with the desired newly formed polymer particles as the first product. Eventually, a fluidized bed consisting of desired polymer particles supplants the start-up bed.

Fluidization in these reactors and processes is achieved by a high rate of fluid recycle to and through the bed, typically in the order of about 50 times the rate of feed of make-up fluid. The fluidized bed has the general appearance of a dense mass of individually moving particles as created by the percolation of gas through the bed. The pressure drop through the bed is equal to or slightly greater than the weight of the bed divided by the cross-sectional area. It is thus dependent upon the geometry of the reactor. The fluidizing gases generally include one or more gaseous monomers, nitrogen, argon, hydrogen, saturated hydrocarbons (that is C₁ to C₁₂ alkanes such as methane, ethane, propane, butane, isopentane, and so forth), and optionally a chain termination agent such as hydrogen.

In processes conducted in such reactors, a gaseous stream containing one or more monomers is passed into a fluidized bed reactor containing a bed of growing polymer particles in a polymerization zone, while continuously or intermittently introducing a polymerization catalyst into the polymerization zone. The desired polymer product is withdrawn from the polymerization zone, degassed and/or purged, stabilized, and packaged for shipment.

In the present invention one or more liquid comonomers are introduced or injected directly into the bed of the reactor. The liquid comonomers can be fed within the bed at any height above the distributor plate and below the entrainment zone of the reactor. It is preferred to feed the liquid comonomers at a point or points between 5% and 90% of the fluidized bed height above the distributor plate which is located at or near the bottom of the reactor. The most preferred height is between 10% and 50% of the fluidized bed height above the plate.

The liquid comonomers are introduced using at least one nozzle or tube positioned such that it protrudes or extends at least 2 inches and at least 20% of the radius of the fluidized bed. Preferably, the nozzle(s) or tube(s) extend at least 2 inches and 20% to 75% of the radius, most preferably at least 2 inches and 25% to 70% of the radius of the fluidized bed. These distances are employed such that the injected liquid does not drip or contact the walls of the reactor and to provide good dispersion of the liquid monomer throughout the bed. In small-size reactors (e.g., laboratory scale) the 2-inch extension is the more important parameter. But for commercial reactors the percentage of the radius is the more important of the two features.

The nozzle(s) need not be inserted horizontally, but a horizontal position is usually the most convenient one. The liquid comonomers can be injected separately or pre-mixed prior to introduction. Preferably, two or more comonomers are pre-mixed prior to introducing them to the polymerization.

As few as one nozzle can be used to feed all of the comonomers into the fluidized bed. Under some conditions, two or more nozzles are desirable. These conditions include production of a product in which a substantial fraction, i.e., greater than 25%, of the make-up monomers being fed to the reactor are liquid. Also, if the difference between the reactor temperature and dew point of the cycle gas is small, more than one nozzle is generally desirable. Further, if the superficial gas velocity is in excess of the minimum velocity for fluidization by less than 5 to 10 multiples, more than one nozzle may be used. Under typical conditions for the production of an EPDM polymer, two nozzles are preferred.

The nozzle(s) can be as simple as a pipe extending into the fluidized bed. Other designs that enhance the dispersion of the comonomers in the bed may be employed as long as they are not susceptible to plugging. Such nozzles and pipes are readily commercially available.

It is frequently convenient to mix two or more liquid comonomers before introducing them into the nozzle(s). For example, it may be convenient to mix together the liquid comonomers propylene and ENB during production of EPDM.

Because the polymerization reaction is exothermic, substantial heat is generated in the polymerization zone which must be removed to prevent the polymer particles from overheating and/or fusing together. This heat removal is accomplished by continuously removing unreacted hot gases from the polymerization zone and replacing them with cooler gases. The hot gases removed from the polymerization zone are compressed, cooled in one or more heat exchangers, optionally supplemented by additional amounts of monomer to replace monomer polymerized and removed from the reaction zone and then recycled into the bottom of the reactor.

Cooling of the recycled gases in the one or more heat exchangers is a matter of design choice. But it is usually a sequence of compression and cooling in which it is preferable to provide for compression of the hot gases prior to cooling. The rate of gas flow into and through the reactor is maintained at a level such that the bed of polymer particles is maintained in a fluidized condition. The production of polymer in a stirred bed reactor is similar, differing primarily in the use of mechanical stirring means to assist in maintaining the polymer bed in a fluidized condition.

To maintain a viable fluidized bed, the superficial gas velocity through the bed must exceed the minimum flow required for fluidization, and is at least 0.1 ft/sec above minimum flow. Ordinarily, the superficial gas velocity does not exceed 5.0 ft/sec and usually no more than 2.7 ft/sec is sufficient.

In the practice of this invention, operating temperatures can extend over a range of from about 30°C to 120°C.

The fluid-bed reactor can be operated at pressures up to about 1000 psig and preferably at a pressure of from about 100 psig to about 550 psig.

The practice of this invention is not limited to any particular class or kind of catalyst. Any catalyst useful in the conduct of a polymerization reaction, especially those employed in gas phase polymerizations, is suitable for use in the practice of this invention. However, this invention is particularly useful for those catalysts in which the polymer produced is sticky. The catalysts employed in these processes utilize transition metals (including metallocenes, typically containing titanium, hafnium, or zirconium) such as vanadium, titanium, nickel, cobalt; rare earth or the so-called lanthanide metals (e.g., Nd); and anionic initiators (e.g., butyl lithium). These catalysts are utilized in supported, unsupported, liquid (including neat, solution, or slurry) forms or spray dried (with/without filler). They can be employed with a cocatalyst, typically an organoaluminum halide, organoaluminum hydride, and/or aluminoxane, and used with or without one or more promoter compounds as a third component of a catalyst system. Because these catalysts are often sensitive to oxygen, any catalyst used to produce polymer is typically maintained in an inert gas (e.g., nitrogen or argon) to avoid moisture and air which are poisons that can decrease catalyst activity. When the catalyst is in liquid form (i.e., neat, slurry, or solution) and the catalyst in liquid form can be mixed with the one or more liquid olefinic monomers prior to be introduced into the fluidized bed.

Inert particulate materials are preferably employed in the polymerizations of the invention. Inert particulate materials that may be contained in the polymers, particularly in elastomers and/or sticky polymers, and used in the polymerization processes are described, for example, in U.S. Patent No. 4,994,534. These materials can include carbon black (including modified carbon blacks as disclosed in WO 98/34960), silica, clay, talc, activated carbon (as disclosed in EP 0 727,447), and mixtures thereof. Organic polymeric materials (e.g., polymers and copolymers of an alpha olefin and polystyrene, in granular or powder form) can also be employed as fluidization aids. Of these, carbon black, silica, and mixtures of them are preferred. When employed as fluidization aids, these inert particulate materials are used in amounts ranging from about 0.3 to about 80% by weight, preferably about 5 to 60%, most preferably 10 to 45%, based on the weight of the polymer produced. Organic polymeric materials are employed in amounts ranging from 0.3 to 50%, preferably 0.3 to 10% by weight based upon the weight of the final polymer produced. The use of these inert particulate materials generally imparts a core-shell structure to the elastomer particle as disclosed in U.S. Patent No. 5,304,588.

Polymers. Polymers produced by the process of the invention are obtained by polymerizing at least one olefinic monomer in liquid form. The olefinic monomer can be can an olefin such as alpha olefins or diolefin, both conjugated and non-conjugated, having 2 to 20 carbon atoms. Illustrative of the preferred polymers which can be produced in accordance with the invention are sticky polymers such as ethylene-propylene rubbers, ethylene-propylene-diene rubbers, polybutadiene, polyisoprene, high ethylene content propylene-ethylene block copolymers, poly(1-butene)(when produced under certain reaction conditions), very low density (low modulus) polyethylenes, i.e., ethylene-butene rubbers or hexene containing terpolymers. When the polymer is an ethylene-propylene-diene rubber, preferably the diene employed in the production of EPR can include: conjugated or non-conjugated dienes, such as linear, branched, or cyclic hydrocarbon dienes having from about 4 to about 20, preferably 4 to 12, carbon atoms. Preferred dienes include 1,4-pentadiene, 1,5-hexathene, 1,7-octadiene, 7-methyl- 1,6-octadiene (MOD), vinylcyclohexene, dicyclopentadiene, butadiene, isoprene, ethylidene norbornene (ENB), and the like. Most preferred are ENB, MOD, dicyclopentadiene, and 1, 5-hexadiene.

All references are incorporated herein by reference.

Whereas the scope of the invention is set forth in the appended claims, the following examples illustrate certain aspects of the present invention. The examples are set forth for illustration and are not necessarily to be construed as limitations on the invention, except as set forth in the claims. Throughout the specifications all parts and percentages are by weight unless otherwise stated.

### Examples

Example 1. (Comparative) Feeding of 1-hexene to the cycle piping. A copolymer of ethylene and hexene, which was not sticky under the reaction conditions, was produced in a gas-phase, fluidized bed reactor in the presence of a titanium-based Ziegler-Natta catalyst. The reactor temperature was 85°C; and the reactor pressure was 300 psig. The 1-hexene was added as a liquid to the cycle gas line at a point upstream of both the cycle gas compressor and the heat exchanger. Ethylene and hydrogen gases were fed at the same injection point. The feed ratio of 1-hexene to ethylene ranged from 0.04 to 0.2; and the superficial gas velocity of the cycle gas in the fluidized bed was 2.0 ft/s.

The reactor operated without difficulty for three days. There was no unusual fouling of the cycle gas line where 1-hexene was fed to it. The copolymer produced had a density of 0.918 g/cm³ and a melt index of 1.0.

This example illustrated that feeding a liquid into the cycle piping of the polymerization reactor was not problematic when the polymer being made was non-sticky under the reaction conditions.

Example 2. (Comparative) Feeding of propylene to cycle piping during the gas-phase, fluidized bed production of a sticky polymer of EPDM (ethylene-propylene-diene terpolymer in which the diene is ethylidene norbornene). The polymerization was conducted in a fluidized bed reactor having an 18 inch diameter and in the presence of inert particulate material (specifically, carbon black N 650). The carbon black was fed immediately above the fluidized bed of the reactor. A vanadium-based Ziegler-Natta catalyst and organoaluminum cocatalyst were fed continuously to the reactor. The reaction temperature was 35°C; and reactor pressure was 400 psig. Superficial gas velocity was 1.8 ft/s. Ethylene partial pressure was 80 psi and the mole ratio of propylene to ethylene was 1.9. Make-up flows of gaseous ethylene, gaseous hydrogen, and liquid propylene were fed to the cycle piping at the discharge of the cycle compressor. Liquid diene (ENB) was fed directly into the fluidized bed.

The reactor produced EPDM for six days before shutdown. Upon inspection it was found that the cycle piping at the point at which propylene, ethylene, and hydrogen were fed was fouled and a large black polymeric chunk had formed at this location.

Example 3. (Comparative) Feeding of ENB to cycle piping in a gas-phase fluidized bed reactor during the production of EPDM. The reaction temperature was 35°C; pressure was 300 psig; superficial gas velocity was 1.8 ft/s. A vanadium-based Ziegler-Natta-type catalyst and cocatalyst were continuously fed to the reactor; and carbon black was fed immediately above the fluidized bed of the reactor. Makeup flows of gaseous ethylene, hydrogen, and liquid propylene were fed to the cycle piping at the discharge end of the recycle compressor. Liquid ENB was fed into the cycle piping upstream of the cycle gas compressor. Ethylene partial pressure was 75 psi and the mole ratio of propylene to ethylene was 1.9. The reactor produced EPDM for several days before it was fouled with a chunk of black polymer at the point where ENB was introduced.

Examples 2 and 3 illustrated that the feeding of liquid comonomer to a polymerization reactor producing a sticky polymer such as EPDM results in the formation of chunks of polymeric material in the cycle piping when the liquid comonomer is fed there. In these examples, the feed points in the cycle gas line for propylene and ENB were badly fouled after only a few days of operation.

Example 4. (Comparative) Feeding of propylene to cycle piping in a gas-phase fluidized-bed reactor in which EPDM, a sticky polymer, was produced. Reaction temperature was 35°C; reactor pressure was 300 psig; superficial gas velocity was 1.8 ft/s. A vanadium-based Ziegler-Natta-type catalyst and cocatalyst were each fed separately to the reactor. Make-up flows of gaseous ethylene, gaseous hydrogen, and liquid propylene were fed to the cycle piping at the discharge end of the recycle compressor. Liquid ENB was fed directly into the fluidized bed and carbon black was fed immediately above the bed. Ethylene partial pressure was 75 psi and the mole ratio of propylene to ethylene was 1.9. After several days, the run was terminated. Examination of the cycle piping at the point where ethylene, propylene, and hydrogen were introduced indicated that it was clean.

From Example 4, it can be seen that when the propylene was not a liquid at the point at which it entered the cycle gas piping (because reactor pressure was lowered such that the propylene partial pressure in the mixture with ethylene and hydrogen was below its dew point) fouling did not occur.

Example 5. Feeding of propylene and ENB directly to the gas phase fluidized bed reactor in which EPDM is produced. EPDM was polymerized in a fluidized bed reactor under conditions similar to those in Example 2. However, liquid propylene and liquid ENB were pre-mixed and fed directly into the fluidized bed. The nozzle used was a 1/4-inch diameter tube extending 4 inches into the reactor fluidized bed. It was inserted horizontally at a height of 2 feet above the distributor plate. The reactor operated smoothly for more than a week. At the end of the run, the inside walls of the reactor were generally clean and there were no chunks in the vicinity of the liquid comonomer injection tube.

From Example 5, it can be seen that, when liquid monomers were fed directly into the reactor bed while a sticky polymer such as EPDM was being produced, fouling of the cycle feed lines by clogging and/or clumping of the polymeric material was avoided. This example further demonstrated that feeding these components as liquids directly into the fluidized bed did not adversely affect operation of the reactor or the polymerization.

## Claims

1. A process for a gas phase polymerization of a polymer using at least one liquid olefinic monomer in the presence of a catalyst, under polymerization conditions, and, optionally, in the presence of an inert particulate material, which comprises adding one or more liquid olefinic monomers directly to a fluidized reactor at one or more points located between 5% and 90% of the fluidized bed height above a distributor plate positioned at or near the bottom of the reactor by means of at least one nozzle or tube positioned to protrude into the fluidized bed at least 5.1 cm (2 inches) and at least 20% of the radius of the reactor.

2. The process of Claim 1 in which the nozzle or tube is positioned to protrude into the fluidized bed of the reactor between 20% and 75% of the radius of the reactor.

3. The process of Claim 1 or 2 wherein the polymer is produced by two or more liquid olefinic monomers which are pre-mixed prior to being introduced directly into the fluidized bed.

4. The process of any one of the preceding Claims wherein at least one of the liquid olefinic monomers is selected from the group consisting of propylene, butene, 1-4-pentadiene, 1,5-hexadiene, 1,7-octadiene, 7-methyl-1,6-octadiene, vinylcyclohexene, dicyclopentadine, butadiene, isoprene, ethylidene norbornene, and mixtures thereof.

5. The process of any one of the preceding Claims wherein the polymer is a sticky polymer.

6. The process of Claim 5 wherein the sticky polymer is selected from the group consisting of ethylene-propylene rubbers, ethylene-propylene-diene rubbers, polybutadiene, polyisoprene, high-ethylene-content propylene-ethylene block copolymers, poly(1-butene), and very low density (low modulus) polyethylenes.

7. The process of Claim 6 for the production of an ethylene-propylene-diene in the presence of an inert particulate material wherein the diene is selected from the group consisting of ethylidene norbornene, 7-methyl-1,6-octadiene, dicyclopentadiene, 1,5-hexadiene, and mixtures thereof and wherein the propylene and diene are mixed together outside the reactor before commencing polymerization.

8. The process of Claim 7 wherein the mixture of propylene and diene is introduced to the fluidized bed of the reactor by means of two or more nozzles or tubes each positioned to protrude between 25% and 70% of the radius of the reactor.

9. The process of any one of the preceding Claims wherein the inert particulate material is carbon black, silica, or a mixture thereof.

10. The process of any one the preceding claims wherein the polymerization is conducted at a temperature ranging from 30°C to 120°C; a pressure ranging from 0.7 MPa gauge to 3.5 MPa gauge (100 psig to 550 psig) a superficial gas velocity ranging from 0.03 m/s to 1.524 m/s (0.1 ft/s to 5.0 ft/s), and the inert particulate material is present in an amount ranging from 0.3 to 80% by weight based on the weight of the polymer produced.

11. The process of any one of the preceding Claims wherein a mixture of two or more liquid olefinic monomers is formed by introducing one liquid olefinic monomer feed stream into the feed stream of at least one of the other liquid olefinic monomer feed streams by means of a tee.
